(19) Europäisches Patentamt

European Patent Office

Office européen des brevets

(11) EP 0 565 987 B1

(12) EUROPÄISCHE PATENTSCHRIFT

(45) Veröffentlichungstag und Bekanntmachung des Hinweises auf die Patenterteilung:
27.10.1999 Patentblatt 1999/43

(51) Int. Cl.⁶: **C04B 24/26**, C04B 24/00, C04B 24/16, C04B 24/42, E03F 3/04

(21) Anmeldenummer: 93105614.7

(22) Anmeldetag: 05.04.1993

(54) **Betonformkörper mit verbesserter Säurebeständigkeit**

Moulded concrete body with good resistance to acids

Corps moulé en béton avec une bonne résistance aux acides

(84) Benannte Vertragsstaaten:
AT BE CH DE ES FR GB IT LI NL PT SE

(30) Priorität: 13.04.1992 DE 4212325

(43) Veröffentlichungstag der Anmeldung:
20.10.1993 Patentblatt 1993/42

(73) Patentinhaber: Clariant GmbH
65929 Frankfurt am Main (DE)

(72) Erfinder:
• Berg, Volkmar, Dr.
W-7523 Graben (DE)
• Rinno, Helmut, Dr.
W-6238 Hofheim (DE)

(56) Entgegenhaltungen:
EP-A- 0 069 586          EP-A- 0 190 353
WO-A-90/10606          DE-A- 2 741 245
GB-A- 1 388 349          GB-A- 2 071 523
NL-A- 8 303 891

**Beschreibung**

Die Erfindung betrifft Betonformkörper mit verbesserter Beständigkeit gegenüber sauren wäßrigen Flüssigkeiten sowie Verfahren zu ihrer Herstellung aus hydraulischen Bindemitteln und Zuschlagstoffen unter Mitverwendung von wäßrigen Kunststoffdispersionen.

In den letzten Jahren sind in zunehmendem Ausmaß Schäden an bewitterten Betonflächen sowie an unterirdisch verlegten Abwasserrohren bekannt geworden, deren Ursachen hauptsächlich durch die gestiegene Aggressivität des Niederschlagswassers, der Umweltluft und der Abwässer sowie bei den Abwasserrohren zusätzlich durch erhöhte äußere Druckbelastungen infolge des stark angewachsenen Schwerlaststraßenverkehrs bedingt sind.

Eine mögliche Verbesserung der Widerstandsfähigkeit von Abwasserrohren gegen die gestiegene Aggressivität der Abwässer könnte z. B. in der Verwendung von Steinzeugrohren gesehen werden. Diese insbesondere in kleinen Durchmessern verfügbaren Rohre sind jedoch für ihre Bruchanfälligkeit und ihre geringe mechanische Stabilität bekannt und es kommt nicht selten vor, daß sie bereits auf dem Transport zur Baustelle durch äußere Einwirkungen beschädigt und dadurch unbrauchbar werden. Auch ihre äußere Druckbeständigkeit nach der Verlegung ist unbefriedigend und ihre Verwendbarkeit bei zu erwartenden Einwirkungen durch Schwerlastverkehr daher erheblich eingeschränkt oder erfordert zusätzliche Sicherungsmaßnahmen. Bei anderen bewitterten Betonfertigteilen bzw. Betonsteinformkörpern, wie z.B. konstruktiven Betonbauelementen oder bewitterten Fassadenflächen, können Schutz- und Deckanstriche in manchen Fällen temporär hilfreich sein, wobei aber z.B. bei Sichtbetonflächen das häufig gewünschte originäre Strukturbetonerscheinungsbild durch Deckanstriche verloren geht.

Die wegen ihrer mechanischen Robustheit in der Praxis bewährten zementgebundenen Betonrohre, die bis zu sehr großen Durchmessern im Einsatz sind, haben sich in jüngster Vergangenheit bekanntlich häufig als nicht "chemostabil" erwiesen und führen infolge von Korrosionsschäden daher immer häufiger zu Umweltproblemen und zu Verlusten. Eine Verbesserung der Korrosionsbeständigkeit von Betonrohren kann häufig noch nachträglich durch Auskleidung oder Beschichtung der Innenfläche mit Kunststoffen erreicht werden, wozu verschiedene Materialien und Verfahren zur Verfügung stehen. Auch das Einziehen von sogenannten Inlinern bietet für unterirdisch verlegte schadhafte Betonrohre eine interessante Reparaturmöglichkeit, ohne die Rohre ausgraben zu müssen. Voraussetzung ist dabei, daß mechanische Belastungen weiterhin von dem Betonkörper der ausgekleideten Betonrohre übernommen werden können. Problematisch ist dabei allerdings die Ausbesserung von Seitenzugängen und Hausanschlüssen, und es hat sich inzwischen auch gezeigt, daß Inlinerröhren häufig vom Abwasser hinterwandert werden und die Betonkorrosion sich dann fortsetzt bzw. bei neuen Betonrohren hinter der Inlinerröhre bzw. hinter der Beschichtung beginnt. Das Inlinerverfahren und die Innenbeschichtung von Abwasserrohren stellen außerdem keine Lösung für den häufig notwendigen äußeren Schutz der Betonrohre dar.

Chemisch und mechanisch besonders widerstandsfähige Abwasserrohre können bekanntlich aus Epoxidbeton hergestellt werden. Diese Rohre haben jedoch u. a. den schwerwiegenden Nachteil sehr hoher Anschaffungskosten, die vergleichsweise etwa beim Zehnfachen derjenigen von Betonrohren liegen.

Bei der Herstellung von zementgebundenen Betonrohren besteht die Möglichkeit der Betonmodifizierung durch Zusatz von wäßrigen Kunststoffdispersionen. Dabei kann die Modifizierung die gesamte Rohrwandstärke erfassen oder sich nur auf innere oder innere und äußere Vorsatzschichten beschränken. Es hat sich dabei aber gezeigt, daß bei Verwendung von handelsüblichen sogenannten Baustoffdispersionen auf der Basis von Copolymerisaten aus ethylenisch ungesättigten Monomeren, insbesondere von Acrylatcopolymerisaten, deren minimale Filmbildungstemperatur (MFT) im Bereich oder unterhalb der Raumtemperatur, vorzugsweise zwischen 0 und 15 °C, liegt, die Säurebeständigkeit von Beton praktisch nicht verbessert werden kann. Bei Verwendung dieser Baustoffdispersionen als Betonveredlungsmittel bei der maschinellen Herstellung von zementgebundenen Betonrohren, z. B. in Rüttelpressformen oder Rollenpressformen, beeinflussen diese Dispersionen ferner die innere Viskosität der plastisch-viskosen Betonmischung solchermaßen, daß sich ihre Verfestigungs- bzw. Abbindezeit und damit ihre erforderliche Verweilzeit in der Rohrpressform bis zur Ausschalung verlängert. Dabei wird insbesondere die erwünschte alsbaldige Erlangung der eigenen Standfestigkeit des ausgeschalten feuchten Betonrohrrohlings verschlechtert, was zu längeren Taktzeiten der Betonrohrpressmaschinen und damit zu Verlusten führt.

In der GB-A-1,388,349 werden Betonformkörper beschrieben, die wasserunlösliche Polymere oder Copolymere auf der Basis von Alkylmethacrylaten enthalten, die Glastemperaturen von mindestens 10 °C aufweisen. Die Betonformkörper werden bei Temperaturen von mindestens 40 °C, also deutlich oberhalb der Glastemperatur der eingesetzten Polymere und damit auch oberhalb der Mindestfilmbildetemperatur (MFT) der Dispersion, gehärtet.

Der vorliegenden Erfindung lag somit die Aufgabe zugrunde, ein Betonveredlungsmittel in Form einer wäßrigen Kunststoffdispersion verfügbar zu machen, welche die Herstellung von durch hydraulische Bindemittel gebundenen Betonformkörpern, vorzugsweise Betonrohren, mit verbesserter säurebeständigkeit ermöglicht und außerdem bei der maschinellen Formkörper- bzw. Rohrherstellung die Taktzeiten bis zur dimensionssicheren Ausschalung der feuchten Betonformkörper zumindest nicht verlängert oder durch rascheres Standfestwerden der feuchten Betonformkörper bzw. Betonrohrrohlinge möglichst weiter verkürzt und das rheologische Verhalten der plastisch-viskosen Betonmischung nicht nachteilig beeinflußt.

Es wurde nun überraschenderweise gefunden, daß die vorstehende Aufgabe dadurch gelöst werden kann, daß man bei der Herstellung von hydraulische Bindemittel enthaltenden Betonmischungen, die zur Herstellung von unbewehrten oder von armierten Betonformkörpern, vorzugsweise Betonrohren, verwendbar sind, den Betonmischungen wäßrige Kunststoffdispersionen auf der Basis von anionischen und hydrolysebeständigen Copolymerisaten aus ethylenisch ungesättigten Monomeren, deren minimale Filmbildungstemperatur (MFT) oberhalb der Abbindetemperatur der Betonmischung liegt, zusetzt.

Gegenstand der Erfindung sind daher durch hydraulische anorganische Bindemittel gebundene und geformte, unbewehrte oder armierte Betonformkörper, vorzugsweise Betonrohre, mit verbesserter Korrosionsbeständigkeit gegen Säuren und saure Abwässer, verbesserter Penetrationsdichtigkeit gegen anorganische und organische Flüssigkeiten und Gase, sowie verbesserter mechanischer Stabilität, hergestellt durch Formung und Erhärtenlassen von plastisch-viskosen Betonmischungen aus hydraulischen anorganischen Bindemitteln, vorzugsweise Zement, Zuschlagstoffen, Wasser und feinverteilten Kunststoffbestandteilen aus anionischen Dispersionscopolymerisaten, die aus ethylenisch ungesättigten Monomeren durch Copolymerisation hergestellt werden, deren Glasübergangstemperatur ($T_G$) höher als 23 °C liegt und die, jeweils bezogen auf das Dispersionscopolymerisat, 0,05 bis 5 Gew.-% Monomereinheiten aus der Gruppe ethylenisch ungesättigter Carbonsäuren, ethylenisch ungesättigter Sulfonsäuren und ethylenisch ungesättigter Phosphonsäuren enthalten, und die gegenüber dem hydraulischen anorganischen Bindemittel und gegenüber sauren Abwässern hydrolysebeständig sind und den plastisch-viskosen Betonmischungen als eine wäßrige und mit dem hydraulischen anorganischen Bindemittel verträgliche Kunststoffdispersion beigemischt werden, deren minimale Filmbildungstemperatur (MFT) oberhalb der Erhärtungstemperatur der plastisch-viskosen Betonmischungen, vorzugsweise zwischen 23 und 100 °C, insbesondere zwischen 30 und 50 °C, liegt, und die 0,01 bis 2 Gew.-%, bezogen auf das Dispersionscopolymerisat, Monomereinheiten aus ethylenisch ungesättigten Monomeren mit siliziumorganischen Resten oder Epoxysilane enthält.

Der Gehalt an anionischem Dispersionscopolymerisat in den plastisch-viskosen Betonmischungen ist variabel und kann den Erfordernissen angepaßt werden. Er beträgt vorzugsweise 2,5 bis 25 Gew.-%, insbesondere 5 bis 15 Gew.-%, bezogen auf die Menge des in den plastisch-viskosen Betonmischungen enthaltenen hydraulischen anorganischen Bindemittels, vorzugsweise Zement, insbesondere Portlandzement. Der Zusatz der anionischen Dispersionscopolymerisate erfolgt in Form ihrer wäßrigen Dispersionen, deren Feststoffgehalt nicht kritisch ist und vorzugsweise 2 bis 70 Gew.-%, insbesondere 20 bis 50 Gew.-%, bezogen auf die Dispersion, beträgt. Der Wasseranteil der Dispersionen ist in seiner gesamten Menge in der Betonrezeptur als Anmachwasser zu berücksichtigen.

Als anionische Dispersionscopolymerisate kommen vorzugsweise (Meth)Acrylsäureestercopolymerisate und (Meth)Acrylsäureester/Styrol-Copolymerisate zur Anwendung, wobei die Copolymerisate außerdem noch anionische Comonomereinheiten aus ethylenisch ungesättigten Carbonsäuren, ethylenisch ungesättigten Sulfonsäuren oder ethylenisch ungesättigten Phosphonsäuren, vorzugsweise mehrere dieser anionischen Monomereinheiten, enthalten müssen und die Glasübergangstemperatur ($T_G$) dieser anionischen Dispersionscopolymerisate vorzugsweise oberhalb von 23 °C liegt. Auch anionische Dispersionscopolymerisate, die Monomereinheiten von Vinylestern, vorzugsweise Vinylacetat, Vinylpropionat und Versaticsäurevinylester, Vinylchlorid, Ethylen und Mono- oder Diester von ethylenisch ungesättigten Dicarbonsäuren, vorzugsweise Maleinsäure- oder Fumarsäureester, enthalten, können in manchen Fällen vorteilhaft oder in den erfindungsgemäß zu verwendenden Kunststoffdispersionen vorteilhaft anteilig enthalten sein, wenn sie u. a. die jeweiligen Anforderungen an die Hydrolysebeständigkeit erfüllen können. Als Comonomereinheiten aus (Meth)Acrylsäureestern kommen vorzugsweise (Meth)Acrylsäure($C_1$-$C_{18}$)alkylester infrage, wobei die Auswahl der einzelnen Comonomeren u. a. solchermaßen zu treffen ist, daß die $T_G$ des zu verwendenden anionischen Dispersionscopolymerisats oberhalb von 23 °C liegt. Die Monomeren bzw. Monomerenmischungen werden derart gewählt, daß Kunststoffdispersionen auf Homo- oder Copolymerenbasis mit einer MFT, die oberhalb von 23 °C, vorzugsweise zwischen 23 und 100 °C, insbesondere zwischen 30 und 50 °C, liegt, entstehen. Dem Fachmann ist aufgrund der $T_G$ der Polymeren (siehe Polymer Handbook von J. Brandrup, H.E.Immergut, John Wiley & Sons, Inc., New York (1975)) und der Polymerisationsparameter bekannt, welche Monomeren oder Monomerenmischungen dafür eingesetzt werden müssen.

Als anionische Comonomereinheiten kommen vorzugsweise Acrylsäure, Methacrylsäure, Vinylsulfonsäure, (Meth)Acrylamidopropansulfonsäure, Vinylphosphonsäure und Vinylbenzolsulfonsäure infrage. Vorzugsweise werden anionische Dispersionscopolymerisate mit Gehalten von mehreren verschiedenen anionischen Comonomereinheiten verwendet. Die anionischen Dispersionscopolymerisate können erfindungsgemäß vorzugsweise auch Comonomereinheiten aus ethylenisch ungesättigten Monomeren mit siliziumorganischen Resten, die reaktiv sein können, oder der wäßrigen Kunststoffdispersion beigemischte Epoxisilane enthalten. Ihr Anteil kann vorzugsweise bis zu 2 Gew.-%, insbesondere 0,01 bis 0,5 Gew.-%, bezogen auf das anionische Dispersionscopolymerisat, betragen. Geeignete Comonomere sind z. B. vorzugsweise Vinylsilane und Vinylsiloxane, wie sie u. a. aus der DE-PS 2148457 und der DE-PS 2148458 bekannt sind. Auch die nachträgliche Zugabe von z. B. Epoxisilanen zu den wäßrigen anionischen Copolymerisatdispersionen kann vorteilhaft sein. Die anionischen Dispersionscopolymerisate kommen vorzugsweise als wäßrige Dispersionen in ihrer Salzform mit einwertigen Kationen, vorzugsweise als Alkali- oder Ammoniumsalze, insbesondere als Natrium- oder Kaliumsalze, zur Anwendung. Die Herstellung der erfindungsgemäß zu verwendenden anionischen Dispersionscopolymerisate in wäßriger Dispersionsform kann vorzugsweise durch Emulsionspolymerisation der Comonomeren nach bekannten Methoden erfolgen, vorzugsweise unter Mitverwendung von anionischen oder von anionischen und nichtionischen Emulgatoren. Ihre Herstellung kann aber auch nach einschlägigen anderen Copolymerisationsmethoden und Überführung der Copolymerisate in eine wäßrige Dispersionsform erfolgen. Die wäßrigen Kunststoffdispersionen können auch aus redispergierbaren Dispersionscopolymerisatpulvern, wie sie bekanntlich aus wäßrigen Kunststoffdispersionen z. B. durch Sprühtrocknung erhältlich sind, hergestellt werden. Zur erfindungsgemäßen Verwendung werden die anionischen Copolymerisatdispersionen insbesondere auf einen neutralen bis schwach alkalischen $p_H$-Wert, vorzugsweise auf $p_H$ 7 bis 8,5, eingestellt.

Die erfindungsgemäß zu verwendenden Kunststoffdispersionen müssen u. a. alkalienbeständig, scherstabil und zementverträglich sein und dürfen die Zementhärtung beim Abbindevorgang des Betons nicht nachteilig beeinflussen. Die Dispersionen müssen ferner vorzugsweise schaumarm sein oder durch Zusatz von Entschäumern schaumarm bzw. entschäumt eingestellt sein, so daß der Luftporengehalt in dem unter ihrer Mitverwendung hergestellten und ausgehärteten Beton vorzugsweise den Bereich von 1 bis 10 Vol.-%, insbesondere 1,5 bis 4 Vol.-%, bezogen auf den Beton, nicht übersteigt (Prüfung entsprechend DIN 1045 und 1048).

Die erfindungsgemäß zu verwendenden Kunststoffdispersionen sind vorzugsweise frei von polymeren Schutzkolloiden, wie z. B. Carboxymethylcellulose, Hydroxyethylcellulose oder Polyvinylalkohol, und enthalten vorzugsweise neben üblichen niedermolekularen anionischen Emulgatoren noch übliche nichtionogene Emulgatoren, wie sie u. a. bei der Emulsionspolymerisation üblicherweise verwendet werden, z. B. Alkylphenolpolyglykolether.

Besonders bevorzugte Kunststoffdispersionen sind z. B. solche auf Basis von anionische Monomereinheiten enthaltenden Copolymerisaten aus Acrylaten und/oder Methacrylaten, (Meth)Acrylaten/Vinylaromaten, insbesondere Styrol/(Meth)Acrylaten, $\alpha$-Methylstyrol/(Meth)Acrylaten und aus Styrol/Butadien/(Meth)Acrylaten, die alle u.a. besonders gute Hydrolysebeständigkeiten zeigen, ferner aus Vinylacetat/Dialkylmaleinaten und aus Vinylacetat/Versaticsäurevinylester/Ethylen.

Besonders bevorzugt, insbesondere auch wegen ihrer guten Hydrolysebeständigkeit, sind ferner anionische Monomereinheiten enthaltende Copolymerisate auf Basis von homologen Acrylsäure-$(C_1-C_{18})$alkylestern und homologen Methacrylsäure-$(C_1-C_{18})$alkylestern, die der Fachwelt als sogenannte Reinacrylate bzw. Reinacrylatdispersionen bekannt sind, sowie Copolymerisate aus diesen homologen Monomeren zusammen mit Styrol, $\alpha$-Methylstyrol und gegebenenfalls Butadien, wobei vorzugsweise alle genannten Copolymerisate gegebenenfalls zusätzlich noch Comonomereinheiten aus ethylenisch ungesättigten Monomeren mit siliciumorganischen Resten, die reaktiv sein können, oder den wäßrigen Kunststoffdispersionen beigemischte Epoxisilane enthalten.

Erfindungsgemäß besonders geeignet sind z. B. wäßrige Kunststoffdispersionen auf der Basis von anionischen Copolymerisaten aus folgenden Comonomeren:

| | |
|---|---|
| a) 53 - 60 GT | Styrol, |
| b) 38 - 45 GT | n-Butylacrylat, |
| c) 2 - 4 GT | ungesättigte Carbonsäuren, vorzugsweise aus der Gruppe Acrylsäure, Methacrylsäure, wobei GT = Gewichtsteile bedeutet, die Summe aus a) + b) + c) = 100 GT Copolymerisat ergeben muß und diese Copolymerisate zusätzlich, jeweils bezogen auf 100 GT Copolymerisat aus a) + b) + c) , |
| d) 0 - 2 Gew.-%, | gegebenenfalls vorzugsweise 0,5 bis 1,5 Gew.-%, Sulfonsäuregruppen oder gegebenenfalls Phosphonsäuregruppen, vorzugsweise Sulfonsäuregruppen, enthaltende ethylenisch ungesättigte Comonomereinheiten und |
| e) 0 - 2 Gew.-%, | gegebenenfalls vorzugsweise 0,5 bis 1,5 Gew.-%, ethylenisch ungesättigte Comonomereinheiten mit siliziumorganischen Resten, die reaktiv sein können, oder, als teilweiser oder vollständiger Ersatz der siliziumorganischen Comonomereinheiten, |
| f) 0 - 2 Gew.-%, | gegebenenfalls vorzugsweise 0,5 bis 1,5 Gew.-%, den wäßrigen Kunststoffdispersionen beigemischte Epoxisilane, wobei gegebenenfalls die Summe aus e) + f) vorzugsweise maximal 2 Gew.-% beträgt, enthalten. Als Emulgatoren enthalten die Dispersionen vorzugsweise übliche anionische und insbesondere anionische und übliche nichtionische tensioaktive Verbindungen in den bei Emulsionspolymerisationen üblichen Mengen. |

Besonders bevorzugte erfindungsgemäße Kunststoffdispersionen sind z. B. solche auf der Basis von anionischen Copolymerisaten folgender Zusammensetzung (GT = Gewichtsteile):

| | |
|---|---|
| a) 53 - 56 GT | Styrol, |

| b) 40 - 43 GT | n-Butylacrylat, |
| c) 2 - 3 GT | Acrylsäure und/oder Methacrylsäure, |
| d) 0,5 - 1,5 GT | Sulfonsäuregruppen enthaltende ethylenisch ungesättigte Comonomere, |
| e) 0 - 2 GT, | gegebenenfalls vorzugsweise 0,5 bis 1,5 GT, ethylenisch ungesättigte Comonomere mit siliziumorganischen Resten, die reaktiv sein können, oder, als teilweiser oder vollständiger Ersatz der siliziumorganischen Comonomeren, |
| f) 0 - 2 GT, | gegebenenfalls vorzugsweise 0,5 bis 1,5 GT, den wäßrigen Kunststoffdispersionen beigemischte Epoxisilane, wobei gegebenenfalls die Summe aus a) + f) vorzugsweise maximal 2 GT beträgt, und die Kunststoffdispersionen als Emulgatoren, jeweils bezogen auf das anionische Copolymerisat, |
| 0,3 - 2 Gew.-%, | vorzugsweise 0,5 bis 1,5 Gew.-%, insbesondere 0,6 Gew.-%, anionische Emulgatoren, vorzugsweise Sulfogruppen enthaltende Emulgatoren, insbesondere Alkalisalze von Schwefelsäurehalbestern oxethylierter Alkylphenole, und |
| 1 - 5 Gew.-%, | vorzugsweise 1,5 - 3 Gew.-%, insbesondere 2 Gew.-%, nichtionogene Emulgatoren, vorzugsweise Alkylphenolpolyglykolether, insbesondere Nonylphenolpolyglykolether oder Tributylphenolpolyglykolether mit vorzugsweise 15 - 50 Ethylenoxideinheiten, enthalten und eine minimale Filmbildungstemperatur (MFT) von ≥ 31 °C besitzen. |

Durch erfindungsgemäße Gehalte an Comonomereinheiten mit siliziumorganischen Resten in den anionischen Copolymerisaten oder durch den wäßrigen Kunststoffdispersionen erfindungsgemäß beigemischte Epoxisilane kann bei der erfindungsgemäßen Verwendung der Kunststoffdispersionen in Betonmischungen die Chemikalienfestigkeit des erhärteten Betons noch verbessert werden, was insbesondere für die Herstellung von Betonabwasserrohren wichtig und vorteilhaft ist.

Als erfindungsgemäß zu verwendende hydraulische Bindemittel eignen sich vorzugsweise alle in amorpher Form vorliegenden anorganischen Stoffe, die mit Wasser zementartig reagieren können. Bevorzugt sind alle Zementsorten, die in der DIN 1164 vorgesehen sind, insbesondere z. B. Hochofenzement und Portlandzement, sowie Mischungen dieser Zementsorten mit Stoffen, welche die Wirkung von Zement ergänzen oder verbessern können, vorzugsweise z. B. Flugaschen aus Kohleverbrennungsprozessen oder aus dem Siliziumherstellungsprozeß.

Als erfindungsgemäß zu verwendende Zuschlagstoffe eignen sich vorzugsweise alle üblichen mineralischen Sande und Kiese, gebrochene mineralische Körnungen, wie z. B. Brechsande, Splitt und deren Feinstkornanteile. Besonders bevorzugt sind alle gemäß DIN 4032, 4034 und 4035 vorgesehenen Zuschlagstoffe. Die Auswahl der Korngrößen der Zuschlagstoffe erfolgt nach bekannten Vorgaben und Kriterien.

Der Anteil des Wassers in den Betonmischungen hängt von den jeweiligen Komponentenzusammensetzungen und von den Verdichtungsmöglichkeiten bei der Betonausformung ab. Er liegt vorzugsweise bei ca. 30 bis 50 Gew.-% Wasser, bezogen auf die Gewichtsmenge des eingesetzten hydraulischen anorganischen Bindemittels, vorzugsweise Zements, wobei der Wasseranteil der Kunststoffdispersion anzurechnen ist.

Die erfindungsgemäß zu verwendenden Kunststoffdispersionen eignen sich vorteilhaft zur maschinellen Herstellung von unbewehrten und von bewehrten (armierten) Betonformkörpern, insbesondere Betonrohren aller gängigen Größen, Formate und Abmessungen, wobei die Rohre z. B. rund, oval, rechteckig oder schalenförmig offen, z. B. U-förmig, oder als Schachtrohre geformt sein können. Vorzugsweise werden Rohre mit muffenförmig ausgebildeten Enden hergestellt, die sich zu flüssigkeitsdichten Rohrleitungen aneinanderfügen und sich vorzugsweise solchermaßen im Erdreich insbesondere als Wasser- und Abwasserkanäle bzw. -leitungen verlegen lassen, wobei z. B. der Bereich der sauren Bioabwässer, beispielsweise aus dem Gärgewerbe, der Milchsäuregärung landwirtschaftlicher Futtermittel oder aus biologischen Kläranlagen neben den Haushalts- und Fäkalienabwässern immer stärker an Bedeutung gewinnt.

Die maschinelle Herstellung erfindungsgemäßer Betonrohre kann vorzugsweise nach bekannten Normen, z. B. DIN 4032 für unbewehrte Rohre, DIN 4035 für armierte Rohre und DIN 4034 für Schächte, nach bekannten Fertigungstechniken auf bekannten Fertigungsmaschinen, vorzugsweise nach dem Rüttelpressverfahren oder nach dem Rollenpressverfahren, als Betonfertigteile erfolgen.

Die unter Mitverwendung erfindungsgemäßer wäßriger Kunststoffdispersionen hergestellten und ausgehärteten Betonformkörper und insbesondere die Betonrohre besitzen außer der angestrebten und bereits erwähnten überraschend und unerwartet stark verbesserten Säurekorrosionsbeständigkeit und der stark verbesserten Diffusionsdichtigkeit gegenüber flüssigen anorganischen und organischen Medien und Gasen, wodurch z. B. bei Abwasserrohren das Penetrieren von grundwassergefährdenden Stoffen in das Erdreich vermindert bzw. verhindert werden kann, auch deutlich verbesserte mechanische Eigenschaften, vergleichsweise zu entsprechenden Betonrohren, die ohne den Zusatz erfindungsgemäßer Kunststoffdispersionen hergestellt wurden, wie z. B. eine erhöhte Scheitelbruchlast, eine verbesserte Ringbiegezugfestigkeit, einen niedrigeren Elastizitätsmodul, eine erhöhte Bruchdehnung sowie eine erhöhte Wasserdichtigkeit und erhöhte Dichtigkeit gegenüber aromatischen und aliphatischen Kohlenwasserstoffen sowie gegenüber halogensubstituierten aromatischen und aliphatischen Kohlenwasserstoffen. Darüber hinaus wird die Carbonatisierung der fertigen Betonrohre während ihrer späteren Gebrauchsdauer deutlich vermindert, was insbesondere bei armierten Betonrohren zur Langzeitaufrechterhaltung des Korrosionsschutzes der Armierung von ganz besonderer Bedeutung ist, wozu auch die durch eine verbesserte Elastizität des erhärteten Betons bedingte stark verminderte Bildung von Haarrissen im armierten Beton entscheidend beitragen kann. Dieselben vorteilhaften Eigenschaften besitzen auch alle sonstigen erfindungsgemäß als Betonfertigteile hergestellten Betonformkörper, vorzugsweise die maschinell mittels Formenpressmaschinen oder Strangpressmaschinen hergestellten Betonsteinformkörper aller technisch möglichen Dimensionen und Formgebungen, mit oder ohne Armierung. Neben den Betonabwasserrohren und Betonabwasserschachtrohren kommen hier prinzipiell alle als Betonfertigteile herstellbaren Betonsteinformkörper infrage, vorzugsweise z. B. Fassadenbauelemente, Spannbetonbauteile, Hallenbinder, Hallenträger, Brückenträger, Eisenbahnschwellen, Decken- und Wandplatten von Gebäuden und deren konstruktiven, tragenden Gebäudebauteilen, Dachkonstruktionen, Mineralöllagertanks, Fertiggaragen, vorgefertigte Betonluftschutz-, -strahlenschutz- und -kampfschutzbunker, transportable Auffangflächen und Auffangtassen bzw. Sammeltassen für gefährliche, korrosive und umweltschädliche Flüssigkeiten, Bauelemente für Schwimmbadbecken und Löschwasserbecken, Gehwegplatten und Bordsteine für den Straßenbau, Verbundpflastersteine, Betondachsteine, U-förmige Erdbausteine, Abdeckplatten, befahrbare Decken- bzw. Fahrbahnplatten, Schlitzrinnen und Birco-Rinnen.

Die üblichen Versuche, die bei der Mörtel-, Beton- und Estrichherstellung zur Veredlung der Endprodukte bereits verwendeten wäßrigen Kunststoffdispersionen, die in der Praxis als sog. Baustoffdispersionen bekannt geworden sind, auch den Betonmischungen zur Herstellung von Betonrohren zuzusetzen, um dadurch gegebenenfalls Verbesserungen der Betonrohreigenschaften zu erzielen, brachten nicht das gewünschte Ergebnis. Diese Baustoffdispersionen besitzen im allgemeinen eine niedrige minimale Filmbildungstemperatur (MFT), die üblicherweise unterhalb von 15 °C liegt. Es hat sich jedoch gezeigt, daß bei Verwendung dieser Baustoffdispersionen in üblichen Mengen als Betonveredlungsmittel bei der maschinellen Herstellung von zementgebundenen Betonrohren, z. B. in Rüttelpressformen oder Rollenpressformen, diese Dispersionen u.a. zwar die innere Viskosität von plastisch-viskosen Betonmischungen vermindern können, gleichzeitig aber auch die Abbindezeit der Betonmischungen sowie auch die Zeitspanne bis zum Standfestwerden der feuchten Betonrohrrohlinge nach dem Ausschalen nachteilig beeinflussen, und zwar u.a. erheblich verlängern, was längere Taktzeiten bei den Betonrohrpressmaschinen erforderlich macht und damit zu Verlusten führt. Darüber hinaus zeigen die unter Zusatz von Baustoffdispersionen hergestellten Betonrohre praktisch keine verbesserte Oberflächenkorrosionsbeständigkeit gegen wäßrige Säuren und säurehaltige Abwässer, vergleichsweise zu entsprechenden Betonrohren, die ohne eine Mitverwendung von Baustoffdispersionen hergestellt worden sind.

Es hat sich nun überraschenderweise gezeigt, daß sich bei Verwendung von wäßrigen Kunststoffdispersionen, die den vorstehend beschriebenen Spezifikationen zur Verbesserung der Säurekorrosionsbeständigkeit von Betonrohren gemäß der vorliegenden Erfindung entsprechen, als Betonveredlungsmittel bei der maschinellen Herstellung von zementgebundenen Betonrohren und anderen Betonformkörpern, diese den damit im Zwangsmischer hergestellten plastischviskosen Betonmischungen thixotrope Eigenschaften verleihen können, die sich produktionstechnisch unerwartet vorteilhaft auswirken können. So wird die Betonmischung beim maschinellen Einfüllen z. B. in die Betonrohrformen unter gleichzeitiger maschineller Verdichtung infolge der dabei auf die Mischung einwirkenden Scherkräfte besser fließfähig, was sich auf den Betonrohrformenfüllvorgang zeitsparend bzw. zeitverkürzend, vergleichsweise zu entsprechenden kunststoffdispersionsfreien Betonmischungen, auswirkt. Nach Beendigung der Scherkräfteeinwirkung verliert die Betonmischung jedoch rasch ihre Plastizität und beginnt unmittelbar zu erstarren, ohne dabei das Zementabbindeverhalten nachteilig zu beeinflussen, so daß der geformte feuchte Betonrohrrohling alsbald ausgeschalt werden kann und mit formstabiler eigener Standfestigkeit erhalten wird, so daß er dimensionsstabil aushärten kann. Mit dieser durch die Verwendung erfindungsgemäßer wäßriger Kunststoffdispersionen erzielbaren unerwartet vorteilhaften thixotropen Eigenschaftsbeeinflussung der plastisch-viskosen Betonmischungen können überraschenderweise bei der maschinellen Betonrohrherstellung sehr kurze Taktzeiten in den Betonrohrpressmaschinen und damit ein unerwartet hoher Produktionsausstoß pro Zeiteinheit bei gleichzeitig deutlich verbesserter Betonrohrqualität erzielt werden.

Gegenstand der Erfindung ist daher auch ein Verfahren zur Herstellung von unbewehrten oder von armierten Betonformkörpern, vorzugsweise Betonrohren, aus übliche hydraulische anorganische Bindemittel, vorzugsweise Zement, und übliche, vorzugsweise anorganische, Zuschlagstoffe enthaltenden wäßrigen formbaren Betonmischungen unter Herstellung von plastisch-viskosen Betonmischungen in einem Zwangsmischer, Formung der Betonformkörper mittels Formenpressmaschinen oder Strangpressmaschinen sowie der Betonrohre vorzugsweise in einer Betonrohrpressmaschine, vorzugsweise nach dem Rüttelpressverfahren oder dem Rollenpressverfahren, und Erhärtenlassen des Betons nach der Ausschalung der feuchten Betonformkörper bzw. Betonrohrrohlinge, dadurch gekennzeichnet, daß man der plastischviskosen Betonmischung eine wirksame Menge einer wäßrigen und mit dem hydraulischen anorganischen Bindemittel verträglichen Kunststoffdispersion auf der Basis von anionischen und hydrolysebeständigen Copolymerisaten aus ethylenisch ungesättigten Monomeren, deren minimale Filmbildungstemperatur (MFT) oberhalb der Abbindetemperatur der Betonmischung liegt, zusetzt und im Zwangsmischer einmischt.

Die MFT der wäßrigen anionischen Kunststoffdispersion liegt vorzugsweise zwischen 23 und 100 °C, insbesondere zwischen 30 und 50 °C, die Glasübergangstemperatur ($T_G$) des anionischen Dispersionscopolymerisats liegt vorzugsweise höher als 23 °C, insbesondere höher als 30 °C, und das anionische Dispersionscopolymerisat enthält, jeweils bezogen auf das Dispersionscopolymerisat, vorzugsweise 0,05 bis 5 Gew.-%, insbesondere 0,01 bis 2,5 Gew.-%, Monomereinheiten aus der Gruppe ethylenisch ungesättigter Carbonsäuren, ethylenisch ungesättigter Sulfonsäuren, ethylenisch ungesättigter Phosphonsäuren sowie gegebenenfalls vorzugsweise bis zu 2 Gew.-%, insbesondere 0,01 bis 0,5 Gew.-%, Monomereinheiten aus ethylenisch ungesättigten Monomeren mit siliziumorganischen Resten, die reaktiv sein können, oder der wäßrigen Kunststoffdispersion beigemischte Epoxisilane.

Die Menge des in wäßriger Dispersionsform zugesetzten anionischen Dispersionscopolymerisats beträgt vorzugsweise 2,5 bis 25 Gew.-%, insbesondere 5 bis 15 Gew.-%, bezogen auf die Menge des in den plastisch-viskosen Betonmischungen enthaltenen hydraulischen anorganischen Bindemittels, vorzugsweise Zement, insbesondere Portlandzement, wobei der Wasseranteil der wäßrigen Kunststoffdispersion als Betonanmachwasser angerechnet wird. Der Feststoffgehalt (FS) der erfindungsgemäß verwendeten wäßrigen Kunststoffdispersionen ist nicht kritisch. Er beträgt vorzugsweise 2 bis 70 Gew.-%, insbesondere 20 bis 50 Gew.-%, bezogen auf die Dispersion.

Das Gewichtsverhältnis von Wasser zu hydraulischem Bindemittel, vorzugsweise das Wasser/Zementverhältnis (W/Z), in der fertigen plastisch-viskosen Betonmischung liegt vorzugsweise im Bereich von 0,3 bis 0,4, insbesondere 0,34 bis 0,36.

Als Kunststoffdispersionen sind die vorstehend zur Verbesserung der Säurekorrosionsbeständigkeit von Beton als erfindungsgemäß beschriebenen wäßrigen Dispersionen auf der Basis von anionischen Dispersionscopolymerisaten, deren MFT oberhalb der Abbindetemperatur des Betons, vorzugsweise oberhalb von 23 °C, insbesondere zwischen 30 und 50 °C, liegt, besonders vorteilhaft verwendbar. Besonders bevorzugt werden wäßrige anionische Reinacrylatdispersionen und wäßrige anionische Styrol/Acrylatdispersionen verwendet, wie sie weiter oben bereits beschrieben wurden.

Die erfindungsgemäß hergestellten feuchten Betonformkörper bzw. Betonrohrrohlinge werden durch mindestens 28-tägiges Lagern, vorzugsweise bei Normaltemperatur an der Luft, getrocknet, während dessen sich die Betonabbindung vollzieht und der Beton erhärtet. Danach können die erhaltenen Betonformkörper bzw. Betonrohre den üblichen Eigenschaftstesten zugeführt bzw. für den vorgesehenen Einsatz verwendet werden.

Die Erfindung wird durch die nachfolgenden Beispiele näher erläutert.

## Beispiel 1

Prüfung der Korrosionsbeständigkeit von Betonprüfkörpern bei der Einwirkung fließender wäßriger Säuren bzw. Alkalien.

Aus labormäßig aus den nachstehend aufgeführten Komponentenmengen in einem Zwangsmischer unter Mitverwendung erfindungsgemäßer Kunststoffdispersionen durch intensives maschinelles Vermischen hergestellten isotropen Betonmischungen wurden jeweils 1,5 cm dicke Betontestplatten des Formats 30 x 15 x 1,5 cm nach der Rüttelgießformmethode geformt und durch 28-tägiges Lagern unter Normklima (20 °C und 65 % relative Luftfeuchte) aushärten lassen. Die Betonmischungen wurden jeweils nach folgender Rezeptur, in der GT = Gewichtsteile bedeuten, hergestellt:

| | |
|---|---|
| 1600 GT | Flußsand |
| 1200 GT | Basalt-Splitt |
| 560 GT | Zement PZ 35F |
| 112 GT *) | Wäßrige Kunststoffdispersion mit 50 Gew.-% Polymerisatanteil (FS) nach Beispiel 1 |
| 140 GT | Wasser bei einem Wasser/Zementfaktor (W/Z) = 0,35 unter Anrechnung von 56 kg Wasser aus der Kunststoffdispersion. |

Als Vergleich wurden in dem Vergleichsbeispiel 1 Betontestplatten ohne den Dispersionskunststoffzusatz hergestellt.

Die Säure- bzw. Alkalibeständigkeitstests wurden jeweils an ausgehärteten festen Betontestplatten (FB) durchgeführt. Die zur Betonveredlung eingesetzten wäßrigen Kunststoffdispersionen wurden der plastisch-viskosen Betonmischung jeweils in einer solchen Menge zugesetzt und gleichmäßig eingemischt, daß sie 10 Gew.-% Dispersionskunststoff, berechnet als Feststoff (FS) und bezogen auf die Gewichtsmenge Zement in der Betonmischung, ent-

*) = 10 Gew.-% Kunststoff berechnet als FS, bezogen auf den Zementanteil.

sprach.

In dem Beispiel 1 wurde eine erfindungsgemäße wäßrige Kunststoffdispersion auf der Basis von anionschen Copolymerisaten mit folgender Zusammensetzung der letzteren (GT = Gewichtsteile) verwendet:

| | |
|---|---|
| 53 GT | Styrol, |
| 42,7 GT | n-Butylacrylat, |
| 2 GT | Acrylsäure und/oder Methacrylsäure, |
| 1,5 GT | Sulfonsäuregruppen enthaltende ethylenisch ungesättigte Comonomere, |
| 0,8 GT | ethylenisch ungesättigte Comonomere mit siliziumorganischen Resten, die reaktiv sein können, |
| | wobei die Kunststoffdispersionen als Emulgatoren, jeweils bezogen auf das anionische Copolymerisat, noch |
| 0,6 Gew.-% | Alkalisalz des Schwefelsäurehalbesters eines oxethylierten Tributylphenols, und |
| 2,0 Gew.-% | Tributylphenolpolyglykolether (mit ca. 30 Ethylenoxideinheiten) enthielt. |

Die Kunststoffdispersion hatte einen Feststoffgehalt (FS) von 50 Gew.-%, einen $p_H$-Wert von 8 und war schaumarm eingestellt. Die minimale Filmbildungstemperatur (MFT) der Dispersion betrug 32 °C und das anionische Dispersionscopolymerisat hatte eine Glasübergangstemperatur ($T_G$) von 35 °C (differentialthermoanalytisch ermittelt). Die Dispersion wurde zur Anwendung vorteilhaft jeweils mit einem Teil des Anmachwassers auf eine niedrigere FS-Konzentration verdünnt.

Es wurden wie vorstehend beschrieben Betontestplatten des Formats 30 x 15 x 1,5 cm unter Mitverwendung der vorstehend unter Beispiel 1 beschriebenen Kunststoffdispersion hergestellt und die Betontestplatten nach 28-tägiger Aushärtung unter Normklima jeweils verschiedenen Korrosionsprüfungen durch Einwirkung fließender wäßriger Säuren bzw. Alkalien unterworfen. Als Vergleich wurden die in dem Vergleichsbeispiel 1 hergestellten Betontestplatten in analoger Weise geprüft.

Zur Korrosionsprüfung wurden die Betontestplatten jeweils in Längsrichtung unter einem Winkel von 45° zur horizontalen Grundfläche aufgestellt und bei Raumtemperatur 3 Tage lang (72 Stunden) mit 1500 ml der auf Korrosivität zu prüfenden jeweiligen wäßrigen Testflüssigkeit gleichmäßig unterhalb der Mitte der oberen Querkante der Platte betropft, so daß die Testflüssigkeit in der Mitte der Platte von oben nach unten in Längsrichtung über die Plattenoberfläche floß. Die Prüfungen mit Natriumhydrogencarbonatlösung sowie mit Mineralwasser dauerten jeweils 21 Tage (504 Stunden) mit jeweils 10,5 l Testflüssigkeit.

Es wurden im einzelnen jeweils 10 gew.-%ige wäßrige Lösungen folgender Verbindungen geprüft:

a) Salzsäure (HCl)
b) Schwefelsäure ($H_2SO_4$)
c) Salpetersäure ($HNO_3$)
d) Phosphorsäure ($H_3PO_4$)
e) Milchsäure
f) Zitronensäure
g) Natronlauge (NaOH)
h) Natriumhydrogencarbonat ($NaHCO_3$), ferner
i) unverdünntes handelsübliches Tafel-Mineralwasser, Marke Neuselters (Fa. Neuselters Mineralquelle, Löhnberg/Selters).

Alle Prüfungen wurden in jeweils 3-facher Wiederholung mit folgendem Ergebnis durchgeführt:

Die Betontestplatten nach Beispiel 1 zeigten in den Prüfungen a) bis e) schwache oberflächenangriffe in Form von schwachen Anrauhungen. Als schwache Anrauhung wurden Oberflächenabtragungen bis zu maximal 0,5 mm Tiefe bezeichnet. In den Prüfungen f) bis i) zeigten sich weder Oberflächenangriffe noch Anrauhungen, aber leichte Verfärbungen der Betonoberflächen.

**Vergleichsbeispiel 1**

Der in Beispiel 1 beschriebene Versuch wurden wiederholt mit der Abänderung , daß in der Rezeptur für die Betonmischung zur Herstellung der Betontestplatten die Kunststoffdispersion weggelassen und der W/Z-Wert durch entsprechende Erhöhung des Wasseranteils erreicht wurde.

Die Korrosionsprüfungen an den dispersionskunststofffreien Betontestplatten wurden wie in Beispiel 1 beschrieben durchgeführt und folgendes Ergebnis erhalten:

Die Betontestplatten zeigten in den Prüfungen a) bis f) sehr starke Oberflächenzerstörungen mit teilweise bis zu 8 mm tiefen Ätzungen. In der Prüfung h) zeigten sich Anlöseerscheinungen an den Benetzungsrändern. In der Prüfung g) zeigten sich keine Oberflächenangriffe, aber starke Verfärbungen der Betonoberfläche. In der Prüfung i) zeigten sich keine oberflächenangriffe, aber geringe Verfärbungen der Betonoberfläche.

**Beispiele 2a und 2b**

Es wurden nach bekannten maschinellen Methoden sowohl nach dem Rüttelpressverfahren als auch nach dem Rollenpressverfahren aus plastisch-viskosen Betonmischungen, die unter Mitverwendung erfindungsgemäßer wäßriger Kunststoffdispersionen in einem Zwangsmischer hergestellt worden sind, nichtarmierte Betonrohre von jeweils 2,5 m Einbaulänge, 0,3 m Innendurchmesser und 6 cm Wandstärke hergestellt und deren Eigenschaften nach 28-tägiger Aushärtung der ausgeschalten Betonrohrrohlinge ermittelt. Die Aushärtung erfolgte unter praxisüblichen Betriebsbedingungen zunächst während der ersten Nacht in der Produktionshalle und anschließend im Freien auf einem Lagerplatz.

Die zur Rohrformung verwendeten und in einem Zwangsmischer hergestellten plastisch-viskosen Betonmischungen wurden jeweils nach folgender Betonrohrrezeptur hergestellt:

Für 1 m$^3$ fließfähige verarbeitbare Betonmischung (= 2500 kg) wurden jeweils die nachstehend aufgeführten Komponentenmengen eingesetzt und in einem üblichen Zwangsmischer (Planetenmischer) gleichmäßig miteinander vermischt, anschließend maschinell in übliche Betonrohrformen gegossen und gleichzeitig maschinell verdichtet, d. h. im Falle des Rüttelpressverfahrens durch intensives maschinelles Rütteln gepreßt und, nach Beendigung des Füll- und Verdichtungsvorgangs, die Rohrformen ausgefahren und die feuchten Betonrohrrohlinge sogleich zur Lagerung wegtransportiert und während 28 Tagen trocknen und erhärten lassen:

|  | 350 kg | Zement PZ 45 F |
|---|---|---|
|  | 70 kg*) |  |
| bzw. | 105 kg**) | Gew.-% Polymerisatanteil (FS) nach Beispiel 1Wäßrige Kunststoffdispersion mit 50 |
|  | 87,5 kg*) |  |
| bzw. | 70 kg**) | Wasser bei W/Z= 0,35 unter von 35 kg *) bzw. 52,5 kg **) Wasser aus der KunststoffdispersionAnrechnung |
|  | 1992,5 kg *) |  |
| bzw. | 1975 kg **) | Zuschlagstoffe (wasserfrei) nach DIN 4032. |

*) = 10 Gew.-% Kunststoff berechnet als FS, bezogen auf den Zementanteil
**) = 15 Gew.-% Kunststoff berechnet als FS, bezogen auf den Zementanteil

Für die Herstellung von armierten Betonrohren wurde im wesentlichen nach der gleichen Betonrezeptur gearbeitet mit der Abänderung, daß nach DIN 4035 statt nach DIN 4032 verfahren wurde.

In den Beispielen 2a und 2b wurde die in Beispiel 1 verwendete und beschriebene erfindungsgemäße wäßrige Kunststoffdispersion in einer Menge von 10 Gew.-% Kunststoff, berechnet als FS und bezogen auf den Zementanteil (= Beispiel 2a), sowie in einer Menge von 15 Gew.-% Kunststoff, berechnet als FS und bezogen auf den Zementanteil (= Beispiel 2b), gemäß der vorstehenden Betonrohrrezeptur zur Herstellung von nichtarmierten Norm-Muffenbetonrohren von 2,5 m Einbaulänge, 0,3 m lichter Weite und 6 cm Wandstärke nach dem Rüttelpressverfahren verwendet.

**Vergleichsbeispiele 2 und 3**

Als Vergleich wurden in den Vergleichsbeispielen 2 und 3 jeweils nichtarmierte Norm-Muffenbetonrohre von 2,5 m Einbaulänge, 0,3 m lichter Weite und 6 cm Wandstärke nach dem Rüttelpressverfahren (= Vergleichsbeispiel 2) bzw. nach dem Rollenpressverfahren (= Vergleichsbeispiel 3) jeweils nach der vorstehenden Betonrohrrezeptur mit der Abänderung hergestellt, daß die Kunststoffdispersion weggelassen und der W/Z-Wert durch entsprechende Erhöhung des Wasseranteils erreicht wurden. Hierbei ergab sich in beiden Fällen, daß die plastisch-viskose Betonmischung beim maschinellen Einfüllen in die Betonrohrformen unter gleichzeitigem maschinellen Verdichten ein nur geringes thixotropes Verhalten sowie ein größeres Luftporenvolumen zeigt, vergleichsweise zu den Betonmischungen der Beispiele 2a und 2b die ein deutliches thixotropes Verhalten beim maschinellen Einfüllen in die Betonrohrformen zeigten.

Die Korrosionsprüfungen an den Betonrohren wurden analog Beispiel 1 sowie dem Vergleichsbeispiel 1 mit sauren Testflüssigkeiten durchgeführt. Die verwendeten Betontestplatten wurden in der erforderlichen Größe jeweils mit Trennscheiben aus den getrockneten und ausgehärteten Betonrohren herausgeschnitten und hatten eine gewölbte Form, im Gegensatz zu den flachen Testplatten aus dem Beispiel 1 sowie dem Vergleichsbeispiel 1.

Als saure Testflüssigkeiten wurden im einzelnen jeweils 10 gew.-%ige wäßrige Lösungen folgender Verbindungen geprüft:

   a) Schwefelsäure ($H_2SO_4$)
   b) Salpetersäure ($HNO_3$)
   c) Milchsäure
   d) Zitronensäure.

Alle Prüfungen wurden in jeweils 3-facher Wiederholung mit folgendem Ergebnis durchgeführt:

Die Betonrohrtestplatten nach dem Beispiel 2a zeigten in den Prüfungen a) geringe Oberflächenangriffe in Form von schwachen Anrauhungen und in den Prüfungen b), c) und d) stärkere Oberflächenanrauhungen.

Die Betonrohrtestplatten nach dem Beispiel 2b zeigten in den Prüfungen a) und c) geringe Oberflächenangriffe in Form von schwachen Anrauhungen und in den Prüfungen b) und d) stärkere Oberflächenanrauhungen.

Die Betonrohrtestplatten nach den Vergleichsbeispielen 2 und 3 zeigten in den Prüfungen a) bis d) starke Oberflächenzerstörungen, mit bis zu 8 mm tiefen Ätzungen in den Prüfungen a) und c), mit 20 bis 30 mm tiefen Ätzungen in den Prüfungen b) und mit 5 bis 15 mm tiefen Ätzungen in den Prüfungen d).

Durch das thixotrope Verhalten der plastisch-viskosen Betonmischungen der erfindungsgemäßen Beispiele 2a und 2b konnten die Maschinentaktzeiten bis zum Ausschalen der feuchten Betonrohrrohlinge, die im Vergleich zu den nach den Vergleichsbeispielen 2 und 3 erhaltenen Rohren wesentlich glattere und auch dichtere Oberflächenstrukturen aufwiesen, sehr kurz gehalten werden.

Die in Analogie zu den erfindungsgemäßen Beispielen 2a und 2b ebenfalls hergestellten erfindungsgemäßen eisenarmierten Betonrohre (nach DIN 4035) zeigten infolge ihrer verminderten $CO_2$-Durchlässigkeit und ihrer deutlich verbesserten Betonelastizität eine unerwartet gute Langzeitkorrosionsschutzwirkung auf die Eisenarmierung, da der Beton nach mehrmonatiger Lagerung unter häufiger Temperaturwechselbeanspruchung praktisch keine Haarrisse zeigte, vergleichsweise zu den nicht erfindungsgemäßen eisenarmierten Betonrohren, die in Analogie zu den Vergleichsbeispielen 2 und 3 hergestellt wurden und bei denen gegebenenfalls korrosive Flüssigkeiten in das Betoninnere eindringen und zur Korrosion der Armierung führen können, was bei den entsprechenden Prüfkörpern verschiedentlich bereits nach kurzer Zeit beobachtet werden konnte, insbesondere nach häufiger Temperaturwechselbeanspruchung innerhalb der jahreszeitlich bedingten Temperaturbandbreite.

Die Prüfung von weiteren anwendungstechnischen Eigenschaften an erfindungsgemäßen nichtarmierten Betonrohrprüfkörpern der Beispiele 2a und 2b vergleichsweise zu nichterfindungsgemäßen nichtarmierten Betonrohrprüfkörpern der Vergleichsbeispiele 2 und 3, ergaben bei den erfindungsgemäßen Betonrohrprüfkörpern eine deutlich erhöhte Scheitelbruchlast (Prüfung nach DIN 4032, Abs. 8.3.1.1), eine deutlich verbesserte Ringbiegezugfestigkeit (Prüfung nach DIN 4032, Abs. 8.3.1.2), einen deutlich niedrigeren Elastizitätsmodul (Prüfung nach DIN 1048), eine deutlich erhöhte Bruchdehnung, ermittelt unter Anwendung von zentrischen Zugversuchen, sowie eine erheblich erhöhte Wasserdichtigkeit (Prüfung nach DIN 1048, Abs. 4.7).

## Patentansprüche

1.   Durch hydraulische anorganische Bindemittel gebundene und geformte, unbewehrte oder armierte Betonformkörper mit verbesserter Korrosionsbeständigkeit gegen Säuren und saure Abwässer, verbesserter Penetrationsdichtigkeit gegen anorganische und organische Flüssigkeiten und Gase, sowie verbesserter mechanischer Stabilität durch Formung und Erhärtenlassen von plastisch-viskosen Betonmischungen aus hydraulischen anorganischen Bindemitteln, Zuschlagstoffen, Wasser und feinverteilten Kunststoffbestandteilen aus anionischen Dispersionscopolymerisaten, die aus ethylenisch ungesättigten Monomeren durch Copolymerisation hergestellt werden, deren Glasübergangstemperatur höher als 23 °C liegt und die, jeweils bezogen auf das Dispersionscopolymerisat, 0,05 bis 5 Gew.-% Monomereinheiten aus der Gruppe ethylenisch ungesättigter Carbonsäuren, ethylenisch ungesättigter Sulfonsäuren, ethylenisch ungesättigter Phosphonsäuren enthalten, und die gegenüber dem hydraulischen anorganischen Bindemittel und gegenüber sauren Abwässern hydrolysebeständig sind und den plastisch-viskosen Betonmischungen als eine wäßrige und mit dem hydraulischen anorganischen Bindemittel verträgliche Kunststoffdispersion beigemischt werden, deren minimale Filmbildungstemperatur (MFT) oberhalb der Erhärtungstemperatur der plastisch-viskosen Betonmischung liegt, und die 0.01 bis 2 Gew.-%, bezogen auf das Dispersionscopolymerisat, Monomereinheiten aus ethylenisch ungesättigten Monomeren mit siliziumorganischen Resten oder Epoxysilane enthält.

2. Betonformkörper nach Anspruch 1, dadurch gekennzeichnet, daß deren Gehalt an anionischen Dispersionscopolymerisaten 2,5 bis 25 Gew.-%, vorzugsweise 5 bis 15 Gew.-%, berechnet als Feststoff (FS) und bezogen auf den Gehalt der Betonformkörper an hydraulischen anorganischen Bindemitteln, beträgt.

3. Betonformkörper nach Anspruch 1 oder 2, dadurch gekennzeichnet, daß sie anionische Dispersionscopolymerisate auf der Basis von (Meth)Acrylsäureestercopolymerisaten und/oder Styrol- bzw. $\alpha$-Methylstyrol/(Meth)Acrylsäure-ester-Copolymerisaten enthalten.

4. Verfahren zur Herstellung von unbewehrten oder von armierten Betonformkörpern, vorzugsweise Betonrohren, nach einem oder mehreren der Ansprüche 1 bis 3 aus übliche hydraulische anorganische Bindemittel, vorzugsweise Zement, und übliche, vorzugsweise anorganische, Zuschlagstoffe enthaltenden wäßrigen formbaren Betonmischungen unter Herstellung von plastisch-viskosen Betonmischungen in einem Zwangsmischer, Formung der Betonformkörper, vorzugsweise mittels Formenpressmaschinen oder Strangpressmaschinen sowie der Betonrohre vorzugsweise in einer Betonrohrpressmaschine, und Erhärtenlassen des Betons nach der Ausschalung der feuchten Betonformkörper bzw. Betonrohrrohlinge, dadurch gekennzeichnet, daß man der plastisch-viskosen Betonmischung eine wirksame Menge einer wäßrigen und mit dem hydraulischen anorganischen Bindemittel verträglichen Kunststoffdispersion auf der Basis von anionischen und hydrolysebeständigen Copolymerisaten aus ethylenisch ungesättigten Monomeren, deren minimale Filmbildungstemperatur (MFT) oberhalb der Abbindetemperatur der Betonmischung liegt, zusetzt und im Zwangsmischer einmischt.

5. Verfahren nach Anspruch 4, dadurch gekennzeichnet, daß die minimale Filmbildungstemperatur (MFT) der wäßrigen anionischen Kunststoffdispersion zwischen 23 und 100 °C, vorzugsweise zwischen 30 und 50 °C, die Glasübergangstemperatur ($T_G$) des anionischen Dispersionscopolymerisats höher als 23 °C, vorzugsweise höher als 30 °C, liegt, und das anionische Dispersionscopolymerisat, jeweils bezogen auf das Dispersionscopolymerisat, vorzugsweise 0,05 bis 5 Gew.-%, insbesondere 0,01 bis 2,5 Gew.-%, Monomereinheiten aus der Gruppe ethylenisch ungesättigter Carbonsäuren, ethylenisch ungesättigter Sulfonsäuren, ethylenisch ungesättigter Phosphonsäuren sowie gegebenenfalls vorzugsweise bis zu 2 Gew.-%, insbesondere 0,01 bis 0,5 Gew.-%, Monomereinheiten aus ethylenisch ungesättigten Monomeren mit siliziumorganischen Resten, die reaktiv sein können, oder der wäßrigen Kunststoffdispersion beigemischte Epoxisilane enthält und der Feststoffgehalt (FS) der Kunststoffdispersion 2 bis 70 Gew.-%, vorzugsweise 20 bis 50 Gew.-%, bezogen auf die Dispersion, beträgt.

6. Verfahren nach Anspruch 4 oder 5, dadurch gekennzeichnet, daß die wäßrige anionische Kunststoffdispersion anionische Dispersionscopolymerisate auf der Basis von (Meth)Acrylsäureestercopolymerisaten und/oder von Styrol- bzw. $\alpha$-Methylstyrol/(Meth)Acrylsäureester-Copolymerisaten enthält.

7. Verfahren nach einem oder mehreren der Ansprüche 4 bis 6, dadurch gekennzeichnet, daß das Gewichtsverhältnis von Wasser zu hydraulischem Bindemittel, vorzugsweise das Wasser/Zementverhältnis (W/Z), in der fertigen plastischviskosen Betonmischung im Bereich von 0,3 bis 0,4, vorzugsweise 0,34 bis 0,36, liegt, wobei der Wasseranteil der wäßrigen Kunststoffdispersion auf die Gesamtmenge des Anmachwassers angerechnet wird.

8. Verwendung von Betonformkörpern nach Ansprüchen 1 bis 3 bzw. hergestellt nach Ansprüchen 4 bis 7, als Betonfertigteile für Fassadenbauelemente, Spannbetonbauteile, Hallenbinder, Hallenträger, Brückenträger, Eisenbahnschwellen, Decken- und Wandplatten von Gebäuden und deren konstruktiven, tragenden Gebäudebauteilen, Dachkonstruktionen, Mineralöllagertanks, Fertiggaragen, vorgefertigte Betonluftschutz-, -strahlenschutz- und -kampfschutzbunker, transportable Auffangflächen und Auffangtassen bzw. Sammeltassen für gefährliche, korrosive und umweltschädliche Flüssigkeiten, Bauelemente für Schwimmbadbecken und Löschwasserbecken, Gehwegplatten und Bordsteine für den Straßenbau, Verbundpflastersteine, Betondachsteine, U-förmige Erdbausteine, Abdeckplatten, befahrbare Decken- bzw. Fahrbahnplatten, Schlitzrinnen und Birco-Rinnen.

9. Verwendung von Betonrohren und Betonschachtrohren nach Ansprüchen 1 bis 3 bzw. hergestellt nach Ansprüchen 4 bis 7, durch Aneinanderkoppeln von, vorzugweise muffenrohrförmigen, Einzelrohren zu flüssigkeitsdichten Rohrleitungen, vorzugsweise zu unterirdisch verlegten Abwasserleitungen oder Brauchwasserleitungen.

**Claims**

1. A molded, unreinforced or reinforced concrete molding bound by hydraulic inorganic binders, with improved corrosion resistance to acids and acidic sewage, improved penetration resistance to inorganic arid organic liquids and gases, and improved mechanical stability by molding and hardening of plastic-viscous concrete mixtures of hydraulic inorganic binders, aggregates, water and finely distributed plastics components from anionic dispersion copolymers which are prepared from ethylenically unsaturated monomers by copolymerization, whose glass transition temperature is higher than 23°C and which contain, in each case based on the dispersion copolymer, 0.05 to 5% by weight of monomer units from the group of ethylenically unsaturated carboxylic acids, ethylenically unsaturated sulfonic acids, ethylenically unsaturated phosphonic acids and are hydrolysis resistant with respect to the hydraulic inorganic binder and with respect to acidic sewage and which are mixed with the plastic-viscous concrete mixtures as an aqueous plastics dispersion which is compatible with the hydraulic inorganic binder and whose minimum film forming temperature (MFT) is above the hardening temperature of the plastic-viscous concrete mixture, and which contains 0.01 to 2% by weight, based on the dispersion copolymer, of monomer units from ethylenically unsaturated monomers with organosilicon radicals or epoxysilanes.

2. A concrete molding as claimed in claim 1, wherein the content of anionic dispersion copolymers is 2.5 to 25% by weight, preferably 5 to 15% by weight, calculated as solid (FS) and based on the content of hydraulic inorganic binders in the concrete molding.

3. A concrete molding as claimed in claim 1 or 2, which contains anionic dispersion copolymers based on (meth)acrylate copolymers and/or styrene or $\alpha$-methylstyrene/(meth)acrylate copolymers.

4. A process for producing unreinforced or reinforced concrete moldings, preferably concrete pipes, as claimed in one or more of claims 1 to 3 from aqueous moldable concrete mixtures containing conventional hydraulic inorganic binders, preferably cement, and conventional, preferably inorganic, aggregates with the production of plastic-viscous concrete mixtures in a positive mixer, shaping of the concrete moldings, preferably by means of press molding machines or extrusion machines, and the concrete pipes preferably in a concrete pipe pressing machine, and allowing the concrete to harden after stripping the wet concrete moldings or concrete pipe blanks, wherein an effective amount of an aqueous plastics dispersion which is compatible with the hydraulic inorganic binder and is based on anionic and hydrolysis-resistant copolymers of ethylenically unsaturated monomers, whose minimum film forming temperature (MFT) is above the setting temperature of the concrete mixture, is added to the plastic-viscous concrete mixture and mixed in in the positive mixer.

5. The process as claimed in claim 4, wherein the minimum film forming temperature (MFT) of the aqueous anionic plastics dispersion is between 23 and 100°C, preferably between 30 and 50°C, the glass transition temperature ($T_g$) of the anionic dispersion copolymer is higher than 23°C, preferably higher than 30°C, and the anionic dispersion copolymer contains, in each case based on the dispersion copolymer, preferably 0.05 to 5% by weight, in particular 0.01 to 2.5% by weight, of monomer units from the group of ethylenically unsaturated carboxylic acids, ethylenically unsaturated sulfonic acids, ethylenically unsaturated phosphonic acids and, if appropriate, preferably up to 2% by weight, in particular 0.01 to 0.5% by weight, of monomer units from ethylenically unsaturated monomers with organo-silicon radicals, which may be reactive, or contains epoxysilanes mixed with the aqueous plastics dispersion, and the solids content (FS) of the plastics dispersion is 2 to 70% by weight, preferably 20 to 50% by weight, based on the dispersion.

6. The process as claimed in claim 4 or 5, wherein the aqueous anionic plastics dispersion contains anionic dispersion copolymers based on (meth)acrylate copolymers and/or on styrene or $\alpha$-methylstyrene/(meth)acrylate copolymers.

7. The process as claimed in one or more of claims 4 to 6, wherein the weight ratio of water to hydraulic binder, preferably the water/cement ratio (W/Z), in the finished plastic-viscous concrete mixture is in the range from 0.3 to 0.4, preferably 0.34 to 0.36, the proportion of water in the aqueous plastics dispersion being taken into account in the entire amount of the mixing water.

8. The use of concrete moldings as claimed in claims 1 to 3 or prepared as claimed in claims 4 to 7 as concrete precast elements for facade construction elements, prestressed concrete components, hall roof trusses, hall girders, bridge girders, railroad ties, floor and wall slabs of buildings and the structural, load-bearing building components thereof, roof structures, mineral oil storage tanks, prefabricated garages, prefabricated concrete air-raid shelters, radiation protection bunkers and combat protection bunkers, transportable catchment surfaces and bunds or collecting basins for hazardous, corrosive and environmentally polluting liquids, construction elements for swimming pools and firefighting water pools, sidewalk slabs and curbstones for road construction, composite paving stones, concrete roof tiles, U-shaped earthwork blocks, cover slabs, wheel load-bearing floor or carriageway slabs, slot channels and Birco channels.

9. The use of concrete pipes and concrete shaft pipes as claimed in claims 1 to 3 or produced as claimed in claims 4 to 7, by coupling together, preferably socket-pipe shaped, individual pipes to form liquid-impermeable pipelines, preferably to form underground sewer pipelines or service water pipelines.

**Revendications**

1. Pièces moulées en béton armé ou non armé, liées par des liants hydrauliques inorganiques et moulées, ayant une meilleure résistance à la corrosion aux acides et aux eaux usées acides, une meilleure imperméabilité à la pénétration aux liquides et gaz organiques et inorganiques, ainsi qu'une meilleure stabilité mécanique, fabriquées par moulage et durcissement de mélanges de béton plastiques-visqueux constitués par des liants hydrauliques inorganiques, des matières d'addition, de l'eau et de constituants en matières plastiques finement divisés de copolymères de dispersion anioniques, lesquels sont préparés par copolymérisation de monomères à insaturation éthylénique, dont la température de transition vitreuse est supérieure à 23°C et lesquelles contiennent, à chaque fois par rapport au copolymère de dispersion, de 0,5 à 5 % en poids de motifs monomères pris dans le groupe des acides carboxyliques à insaturation éthylénique, des acides sulfoniques à insaturation éthylénique, des acides phosphoniques à insaturation éthylénique, et lesquels présentent une stabilité à l'hydrolyse vis-à-vis du liant hydraulique inorganique et vis-à-vis des eaux usées acides et que l'on ajoute par mélange aux mélanges de béton plastiques-visqueux sous forme de dispersion de matières plastiques compatible au liant hydraulique inorganique, dont la température de formation de film minimale (TFM) est supérieure à la température de durcissement du mélange de béton plastique-visqueux, et laquelle contient de 0,01 à 2% en masse, par rapport au copolymère de dispersion, de motifs monomères de monomères à insaturation éthylénique comportant des restes organosiliciés ou des époxysilanes.

2. Pièces moulées en béton selon la revendication 1, caractérisées en ce que leur teneur en copolymères de dispersion anionique est de 2,5 à 25% en masse, de préférence de 5 à 15% en masse, par rapport à l'extrait sec (ES) et par rapport à la teneur en liants hydrauliques inorganiques dans les pièces moulées en béton.

3. Pièces moulées en béton selon la revendication 1 ou 2, caractérisées en ce qu'elles contiennent des copolymères de dispersion anioniques à base de copolymères des esters de l'acide (méth)acrylique et/ou de copolymères du styrène ou de l'$\alpha$-méthylstyrène/esters de l'acide (méth)acrylique.

4. Procédé de préparation de pièces moulées en béton non armé ou armé, de préférence de tuyaux en béton, selon une ou plusieurs des revendications 1 à 3 à partir de mélanges de béton aqueux moulables contenant des liants hydrauliques inorganiques, de préférence le ciment, et des matières d'addition usuelles, de préférence inorganiques, en fabricant des mélanges de béton plastiques-visqueux dans un malaxeur à mélange forcé, en moulant les pièces moulées en béton, de préférence au moyen de machines à mouler par pression ou d'extrusion par pression ainsi que les tuyaux en béton, de préférence dans une machine de compression de tuyaux en béton, et par durcissement du béton après décoffrage de la pièce moulée en béton humide, respectivement de l'ébauche du tuyau en béton, caractérisé en ce que l'on ajoute au mélange plastique-visqueux une quantité efficace d'une dispersion aqueuse et compatible au liant hydraulique de matières plastiques à base de copolymères anioniques et résistants à l'hydrolyse de monomères à insaturation éthylénique dont la température de formation de film minimale (TFM) est supérieure à la température de prise du mélange de béton, et on mélange dans un malaxeur à mélange forcé.

5. Procédé selon la revendication 4, caractérisé en ce que la température de formation de film minimale (TFM) de la dispersion aqueuse de matières plastiques anioniques est comprise entre 23 et 100°C, de préférence entre 30 et 50°C, la température de transition vitreuse ($T_G$) du copolymère de dispersion anionique est supérieure à 23°C, de préférence supérieure à 30°C, et le copolymère de dispersion anionique contient, chaque fois par rapport au copolymère de dispersion, de préférence de 0,05 à 5% en masse, en particulier de 0,01 à 2,5% en masse, de motifs monomères pris dans le groupe des acides carboxyliques à insaturation éthylénique, des acides sulfoniques à insaturation éthylénique, des acides phosphoniques à insaturation éthylénique ainsi qu'éventuellement de préférence jusqu'à 2% en masse, en particulier de 0,01 à 0,5% en masse de motifs monomères de monomères à insaturation éthylénique comportant des restes organisiliciés lesquels peuvent être réactifs, ou des époxysilanes mélangés aux dispersions aqueuses de matières plastiques et la teneur en extrait sec (ES) de la dispersion de matières plastiques est de 2 à 70% en masse, de préférence de 20 à 50% en masse, par rapport à la dispersion.

6. Procédé selon la revendication 4 ou 5, caractérisé en ce que la dispersion aqueuse de matières plastiques anioniques contient des copolymères de dispersion à base de copolymères des esters de l'acide (méth)acrylique et/ou de copolymères du styrène ou d'$\alpha$-méthylstyrène/ esters de l'acide (méth)acrylique.

7. Procédé selon une ou plusieurs des revendications 4 à 6, caractérisé en ce que le rapport pondéral de l'eau au liant hydraulique, de préférence le rapport eau/ciment (E/C) dans le mélange fini de béton plastique-visqueux se trouve dans le domaine de 0,3 à 0,4, de préférence de 0,34 à 0,36, la proportion de l'eau de la dispersion aqueuse de matières plastiques étant calculée à la quantité totale de l'eau à gâcher.

8. Utilisation de pièces moulées en béton selon les revendication 1 à 3, ou bien fabriquées selon les revendications 4 à 7, en tant que pièces préfabriquées en béton comme éléments de construction de façades, éléments de construction en béton précontraint, fermes de halle, poutres de halle, poutres de pont, traverses de chemins de fer, panneaux de toitures et de murs de bâtiments et leurs éléments de construction constitutifs et porteurs, constructions de toiture, réservoirs de pétrole, garages préfabriqués, abris de protection en béton préfabriqués contre attaques aériennes, contre rayonnement ionisant et abris de guerre, aires de réception et récipients de réception ou bacs de collecte transportables pour liquides dangereux, corrosifs et polluants, éléments de construction de piscines et de bassins d'eau incendie, dalles de passage de piétons et pierres de bordure dans la construction de routes, pavés de dallage composites, tuiles de toiture en béton, dalles de construction à terre en U, panneaux de couverture, couvre-joints ou tabliers, rigoles fendues et rigoles Birco.

9. Utilisation de tuyaux en béton et de gaines en béton selon les revendications 1 à 3, respectivement fabriqués selon les revendications 4 à 7, par couplage, de préférence, de tuyaux en forme de manchon, de tuyaux individuels pour canalisations étanches de fluides, de préférence pour canalisation enterrées des eaux usées ou d'eau industrielle.